# EUROPEAN PATENT SPECIFICATION

(11) **EP 2 998 369 B1**
(45) Date of publication and mention of the grant of the patent: **25.04.2018**
(21) Application number: 15185067.4
(22) Date of filing: 14.09.2015
(51) Int. Cl.: C09D 11/101, C09D 11/30, C09D 11/328, C09D 11/38, D06P 5/00, D06P 5/30

(54) **TEXTILE PRINTING INK, AND PRINTING METHOD USING SAME**
DRUCKTINTE FÜR TEXTILIEN UND DRUCKVERFAHREN DAMIT
ENCRE D'IMPRESSION TEXTILE ET PROCÉDÉ D'IMPRESSION UTILISANT CELLE-CI

(30) Priority: 17.09.2014 JP 2014189381
(43) Date of publication of application: 23.03.2016
(73) Proprietor: Mimaki Engineering Co., Ltd., Tomi-shi, Nagano 389-0512 (JP)
(72) Inventor: OHNISHI, Masaru, Tomi-shi, Nagano 389-0512 (JP); SAKAGUCHI, Ayumi, Tomi-shi, Nagano 389-0512 (JP); HASHIZUME, Hironori, Tomi-shi, Nagano 389-0512 (JP)
(74) Representative: Takeuchi, Maya

(56) References cited:
- JP-A- 2003 508 277
- JP-A- 2006 144 180
- JP-A- 2010 155 889

## Description

### Technical Field

The present invention relates to a textile printing ink, and a printing method using same.

### Background Art

JP-T-2003-508277 (published March 4, 2003) describes a method and a device for inkjet printing on a textile with a UV curable ink. This publication also describes a method for reducing the uncured UV curable ink by heating the UV cured UV curable ink printed on a textile.

JP-A-2006-144180 (published June 8, 2006) describes a method for recording on a fabric. In this method, an inkjet ink for textile printing containing at least a color material, and a water-soluble compound that is polymerizable by irradiation of external energy rays is printed on a fabric, and the polymerizable water-soluble compound is irradiated with external energy rays to generate a polymer compound. After a chromogenic process, the fabric is water washed to record an image.

Using a UV curable ink to prevent bleeding may produce a harmful residual monomer as a result of the UV curable ink remaining uncured in the fabric permeated with the ink. Another problem is that the cured resin remains in the fabric and makes the fabric stiff. There accordingly is a need for a textile printing ink that does not cause bleeding or stiffen the printed fabric.

### Summary of Invention

The present invention has been made in view of the foregoing problems, and it is an object of the present invention to provide a textile printing ink with which residual resin components can be reduced while reducing bleeding.

The present inventors conducted intensive studies to solve the foregoing problems, and completed the present invention, as follows.

A textile printing ink used in a method according to the present invention includes a light-curable compound, a chain transfer agent, and a photopolymerization initiator, the light-curable compound being at least one acrylamide compound having one vinyl group and selected from the group consisting of (meth)acrylamide compounds and N-substitution products thereof.

The light-curable compound acts as a binder for adsorbing fabric and dye, and can prevent bleeding. The light-curable compound is also easily removable by water washing, and can reduce the residual resin component. The stiffening of a printed fabric also can be reduced.

It is more preferable in the textile printing ink used in the method according to the present invention that the light-curable compound is at least one selected from the group consisting of N-alkyl(meth)acrylamides having an alkyl group of 1 to 4 carbon atoms, and N-hydroxyalkyl(meth)acrylamides having an alkyl group of 2 to 4 carbon atoms.

It is more preferable in the textile printing ink according to the present invention that the N-alkyl (meth) acrylamides having an alkyl group of 1 to 4 carbon atoms are at least one selected from the group consisting of N-methyl(meth)acrylamide, N-ethyl(meth)acrylamide, N-propyl(meth)acrylamide, N-butyl(meth)acrylamide, N,N'-dimethyl(meth)acrylamide (DMAA), and N,N'-diethyl(meth)acrylamide.

It is more preferable in the textile printing ink used in the method according to the present invention that the N-hydroxyalkyl (meth) acrylamides having an alkyl group of 2 to 4 carbon atoms are at least one selected from the group consisting of N-hydroxyethyl(meth)acrylamide (HEAA), N-hydroxypropyl(meth)acrylamide, and N-hydroxybutyl(meth)acrylamide.

It is more preferable in the textile printing ink used in the method according to the present invention that the light-curable compound is N-hydroxyethyl(meth)acrylamide.

N-hydroxyethyl(meth)acrylamide is more adherent to fabric, and, with its notably high solubility in water, can more effectively prevent bleeding, and further reduce the residual resin in the fabric.

An inkjet printing ink for textile printing used in the method according to the present invention includes the textile printing ink described above.

A printing method according to the present invention includes:
- preparing (i) a first ink containing a light-curable compound, a chain transfer agent for adjusting the molecular weight of a polymer, a photopolymerization initiator, and a dye, the light-curable compound being at least one acrylamide compound having one vinyl group and selected from (meth)acrylamide compounds and N-substitution products thereof,
- printing the fabric with the first ink;
- fixing the first ink by irradiating UV light and curing the first ink;
- performing a chromogenic process to cause the dye to diffuse and develop a color in the fabric;
- performing a water washing process to remove residues. Preferably, the method further comprises preparing(ii) a second ink containing a light-curable compound, a chain transfer agent, a photopolymerization initiator, and a dyeing auxiliary agent, the light-curable compound being at least one acrylamide compound having one vinyl group and selected from (meth)acrylamide compounds and N-substitution products thereof; and printing with the first and second inks using different nozzles.

With this configuration, bleeding and an offset become stable regardless of the color and the color density of the image, and the storage stability of the ink can improve.

A printing method according to the present invention includes:
printing a fabric with an ink that contains a light-curable compound, a chain transfer agent, a photopolymerization initiator, a dyeing auxiliary agent, and a dye, the light-curable compound being at least one acrylamide compound having one vinyl group and selected from the group consisting of (meth)acrylamide compounds and N-substitution products thereof.

With this configuration, a print can be made at once with a single row of nozzles, and the print time can be reduced.

The textile printing ink according to the present invention can reduce bleeding and residual resin components. Preferably, the printing method further comprises performing irradiation of light for curing and fixing the first ink and the second ink. The irradiation of light may be an irradiation of UV light.

### Brief Description of Drawings

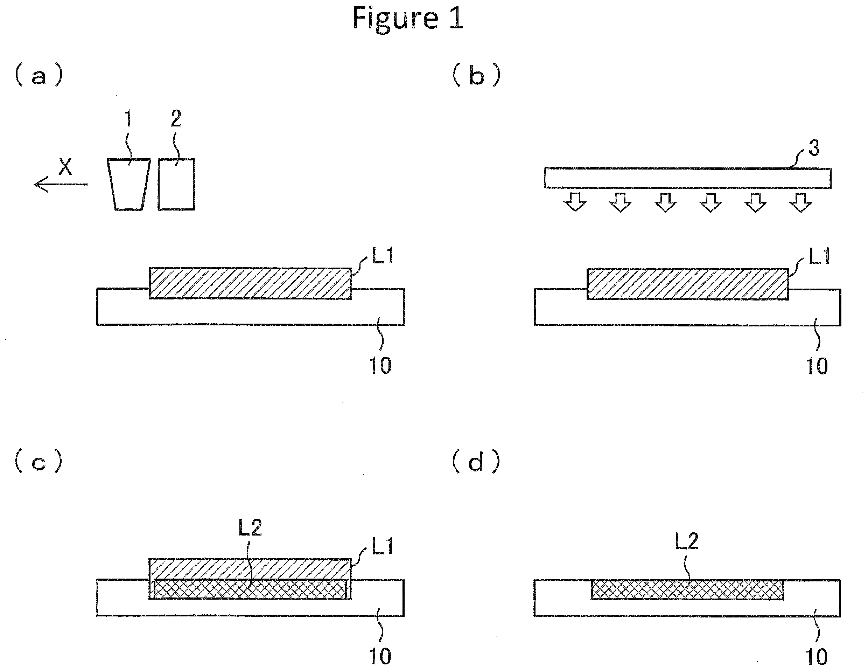

Figs. 1a to 1d are schematic diagrams representing a printing process according to an embodiment of a printing method according to the present invention.

### Description of Embodiments

### <Textile Printing ink>

A textile printing ink according to the present invention contains a light-curable compound, a chain transfer agent, and a photopolymerization initiator, the light-curable compound being at least one acrylamide compound having one vinyl group and selected from the group consisting of (meth)acrylamide compounds and N-substitution products thereof. The textile printing ink according to the present invention can be used for textile printing, particularly preferably inkjet textile printing. Specifically, the textile printing ink according to the present invention may be adapted for use as an inkjet printing ink for textile printing.

### [Light-Curable Compound]

The textile printing ink according to the present invention contains a light-curable compound. The light-curable compound is at least one acrylamide compound having one vinyl group, and is selected from the group consisting of (meth)acrylamide compounds and N-substitution products thereof.

The compound obtained after the photopolymerization of the light-curable compound contained in the textile printing ink according to the present invention has high adhesion to various fabrics. Specifically, the compound has high media compatibility. The textile printing ink according to the present invention thus enables printing on various fabrics while reducing bleeding.

The compound obtained after the photopolymerization of the light-curable compound contained in the textile printing ink according to the present invention is highly soluble in water, and can easily be removed from the printed fabric. Any residual resin component in the fabric can thus be reduced. Further, by being removable with water, the ink is less likely to irritate skin. This makes it easier to handle the ink, and reduce the risks posed to workers handling the ink.

The fabric also does not irritate the skin because any excess light-curable resin can be sufficiently washed off with water. The printed fabric, with the weakly irritating property of the light-curable resin itself and washing off of the light-curable resin with water, does not cause harm to the user. Because the ink does not stiffen the fabric, the product fabric feels soft and comfortable.

Examples of the light-curable compound include N-alkyl (meth) acrylamides having an alkyl group of 1 to 4 carbon atoms, and N-hydroxyalkyl(meth)acrylamides having an alkyl group of 2 to 4 carbon atoms.

Specific examples of N-alkyl (meth) acrylamides having an alkyl group of 1 to 4 carbon atoms include N-methyl(meth)acrylamide, N-ethyl(meth)acrylamide, N-propyl(meth)acrylamide, N-butyl(meth)acrylamide, N,N'-dimethyl(meth)acrylamide (DMAA), and N,N'-diethyl(meth)acrylamide.

Examples of the N-hydroxyalkyl(meth)acrylamides having an alkyl group of 2 to 4 carbon atoms include N-hydroxyethyl(meth)acrylamide (HEAA), N-hydroxypropyl(meth)acrylamide, and N-hydroxybutyl(meth)acrylamide.

The light-curable compound is most preferably N-hydroxyethyl(meth)acrylamide. N-Hydroxyethyl(meth)acrylamide is more adherent to fabric, and, with its notably high solubility in water, can more effectively prevent bleeding, and further reduce the residual resin in the fabric.

### (Photopolymerization Initiator)

The photopolymerization initiator is not particularly limited, as long as it initiates polymerization of the light-curable compound upon irradiation of light. The photopolymerization initiator may be used alone or in a combination of two or more kinds thereof, with or without a sensitizer. The types of photopolymerization initiators and sensitizers, and the combination and the mixing ratio of these components may be appropriately selected according to such factors as the type of the light-curable compound and the device used.

Prime examples of the photopolymerization initiator include 1-hydroxycyclohexylphenylketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, Michler's ketone, benzoin propyl ether, benzoin ethyl ether, benzyl dimethyl ketal, 1-(4-isopropylphenyl)-2-hydroxy-2-methylpropan-1-one, 2-hydroxy-2-methyl-1-phenylpropan-1-one, thioxanthone, diethylthioxanthone, 2-isopropylthioxanthone, 2-chlorothioxanthone, 2-methyl-1-[4-(methylthio)phenyl]-2-morpholino-propan-1-on e, 2,4,6-trimethylbenzoyldiphenylphosphine oxide, bis-(2,6-dimethoxybenzoyl)-2,4,4-trimethylpentylphosphine oxide, and bis(2,4,6-trimethylbenzoyl)-phenylphosphine oxide.

### (Chain Transfer Agent)

The chain transfer agent is not particularly limited, as long as it is a compound that can adjust the molecular weight of the polymer. By mixing the chain transfer agent, the molecular weight of the cured product of the photo-irradiated textile printing ink does not become excessively large, and the solubility of the cured product in water improves.

Specifically, preferred examples of the chain transfer agent include thiol compounds (such as 2-mercaptobenzothiazole, and γ-(mercaptopropyl)trimethoxysilane), and 2,4-diphenyl-4-methyl-pentene.

The chain transfer agent is mixed in the textile printing ink of the present invention in preferably 0.1 to 5 mass%, more preferably 0.2 to 4 mass%, particularly preferably 0.3 to 3 mass% with respect to the total 100 mass% of the textile printing ink. In this way, the cured product can have desirable water solubility.

### [Other Components]

The textile printing ink according to the present invention may contain components other than the light-curable compound, the photopolymerization initiator, and the chain transfer agent. Examples of such additional components include additives (such as a sensitizer), dyes, dyeing auxiliary agents, and water-soluble solvents.

### (Sensitizer)

The sensitizer is not particularly limited, as long as it can enhance the reactivity of the photopolymerization initiator.

Prime examples of the sensitizer include:
amine compounds (such as aliphatic amines, aromatic group-containing amines, and piperidine);
urea compounds (such as allyl-based ones, and o-tolyl thiourea);
sulfur compounds (such as sodium diethyldithiophosphate, and soluble salts of aromatic sulfinic acid);
nitrile compounds (such as N,N,disubstituted p-aminobenzonitrile);
phosphorus compounds (tri-n-butylphosphine, and sodium diethyldithiophosphate);
nitrogen compounds (such as Michler's ketone, N-nitrosohydroxylamine derivatives, oxazolidine compounds, tetrahydro-1,3-oxazine compounds, and condensation products of formaldehyde or acetaldehyde with diamine);
chlorine compounds (such as carbon tetrachloride, and hexachloroethane);
polymeric amines of reaction products of epoxy resin and amine; and
triethanolamine triacrylate.

### (Additives)

Aside from the foregoing components, the textile printing ink of the present invention may contain various known additives, including, for example, surfactants, preservatives, mildew-proofing agents, pH adjusters, viscosity adjusters, dispersants, and dyeing auxiliary agents.

The surfactants may be cationic, anionic, ampholytic, or non-ionic surfactants. Examples of cationic surfactants include aliphatic amine salts, aliphatic quarternary ammonium salts, benzalkonium salts, benzethonium chloride, pyridinium salts, and imidazolinium salts.

Examples of anionic surfactants include fatty acid soap, N-acyl-N-methylglycine salts, N-acyl-N-methyl-β-alanine salts, N-acylglutamate, alkyl ether carboxylate, acylated peptide, alkyl sulfonate, alkylbenzenesulfonate, alkylnaphthalenesulfonate, dialkyl sulfosuccinate, alkyl sulfoacetate, α-olefin sulfonate, N-acylmethyltaurine, sulfated oil, higher alcohol sulfate, secondary higher alcohol sulfate, alkyl ether sulfate, secondary higher alcohol ethoxysulfate, polyoxyethylene alkylphenyl ether sulfate, monoglysulfate, fatty acid alkylolamide sulfate, alkyl ether phosphate, and alkyl phosphate.

Examples of ampholytic surfactants include carboxybetaine-type surfactants, sulfobetaine-type surfactants, aminocarboxylate, and imidazolinium betaine.

Examples of non-ionic surfactants include polyoxyethylene alkyl ether, polyoxyethylene secondary alcohol ether, polyoxyethylene alkylphenyl ether (for example, EMALGEN 911 by Kao Corporation), polyoxyethylene sterol ether, polyoxyethylene lanolin derivatives, polyoxyethylene polyoxypropylene alkyl ether (for example, NEWPOL PE-62 by Sanyo Chemical Industries), polyoxyethylene glycerin fatty acid ester, polyoxyethylene castor oil, hydrogenated castor oil, polyoxyethylene sorbitan fatty acid ester, polyoxyethylene sorbitol fatty acid ester, polyethylene glycol fatty acid ester, fatty acid monoglyceride, polyglycerin fatty acid ester, sorbitan fatty acid ester, propylene glycol fatty acid ester, sucrose fatty acid ester, fatty acid alkanolamide, polyoxyethylene fatty acid amide, polyoxyethylene alkylamine, alkylamine oxide, acetylene glycol, and acetylene alcohol.

When using a surfactant, the surfactant may be used alone or as a mixture of two or more kinds thereof. The surfactant may be added in, for example, 0.001 to 1.0 mass% with respect to the total amount of the textile printing ink. This is preferable as it allows the surface tension of the ink to be arbitrarily adjusted.

The ink may contain a preservative or a mildew-proofing agent to maintain the long-term storage stability of the ink. Examples of preservatives and mildew-proofing agents include aromatic halogen compounds (for example, Preventol CMK by Lanxess AG), methylenedithiocyanate, halogen-containing nitrogen sulfur compounds, and 1,2-benzoisothiazolin-3-one (for example, PROXEL GXL by LONZA Group Ltd.). The present invention, however, is not limited to these.

When the textile printing ink according to the present invention is of a form containing a dispersive dye, the dispersive dye may be dispersed after being mixed with a dispersant, a wetting agent, a medium, and any additives, using a disperser.

Examples of the wetting agent that can be preferably used to disperse the dispersive dye include sodium dodecylbenzene sulfonate, sodium 2-ethylhexylsulfosuccinate, sodium alkylnaphthalene sulfonate, ethylene oxide adducts of phenol, and ethylene oxide adducts of acetylenediol.

Examples of the dispersant include formalin condensation products of creosote oil sodium sulfonate (for example, Demol C by Kao Corporation), formalin condensation products of cresol sodium sulfonate and 2-naphthol-6-sodium sulfonate, formalin condensation products of cresol sodium sulfonate, formalin condensation products of phenol sodium sulfonate, formalin condensation products of β-naphthol sodium sulfonate, formalin condensation products of β-naphthaline sodium sulfonate (for example, Demol N by Kao Corporation) and β-naphthol sodium sulfonate, lignin sulfonate (for example, VANILLEX RN by Nippon Paper Industries Co., Ltd.), paraffin sodium sulfonate (for example Efcol 214 by Matsumoto Yushi-Seiyaku Co., Ltd), and copolymerization products of α-olefin and maleic acid anhydride (for example, Floren G-700 by Kyoeisha Chemical Co., Ltd.). The dispersants may be used either alone or in combination.

### (Dye)

Examples of the dye include reactive dyes, acidic dyes, dispersive dyes, and direct dyes. These may be used alone or as a mixture of two or more kinds thereof.

The dye may be appropriately selected according to the type of printing media (fabric). For example, reactive dyes are preferred when the fiber (fabric) is made from a material such as cotton and silk, and acidic dyes and direct dyes are preferred when materials such as nylon, wool, silk, and rayon are used. Dispersive dyes are preferred when the fiber is made from polyester, acetate, or nylon material. The invention, however, is not limited to these examples.

Examples of the reactive dyes include pyrazolone azo, benzene azo, naphthalene azo, pyridone azo, J acid azo, H acid azo, K acid azo, anthraquinone, metal complex salt-type monoazo, formazan, phthalocyanine, disazo, azine, and dioxazine dyes. Examples of reactive groups include multifunctional groups such as vinylsulfone, dichlorotriazine, monofluorotriazine, trichloropyrimidine, vinylsulfone, and monochlorotriazine.

More specific examples include:
C.I. Reactive Yellow 2, 3, 7, 15, 17, 18, 22, 23, 24, 25, 27, 37, 39, 42, 57, 69, 76, 81, 84, 85, 86, 87, 92, 95, 102, 105, 111, 125, 135, 136, 137, 142, 143, 145, 151, 160, 161, 165, 167, 168, 175, 176,
C.I. Reactive Orange 1, 4, 5, 7, 11, 12, 13, 15, 16, 20, 30, 35, 56, 64, 67, 69, 70, 72, 74, 82, 84, 86, 87, 91, 92, 93, 95, 107,
C.I. Reactive Red 2, 3, 3:1, 5, 8, 11, 21, 22, 23, 24, 28, 29, 31, 33, 35, 43, 45, 49, 55, 56, 58, 65, 66, 78, 83, 84, 106, 111, 112, 113, 114, 116, 120, 123, 124, 128, 130, 136, 141, 147, 158, 159, 171, 174, 180, 183, 184, 187, 190, 193, 194, 195, 198, 218, 220, 222, 223, 228, 235,
C.I. Reactive Violet 1, 2, 4, 5, 6, 22, 23, 33, 36, 38, C.I. Reactive Blue 2, 3, 4, 7, 13, 14, 15, 19, 21, 25, 27, 28, 29, 38, 39, 41, 49, 50, 52, 63, 69, 71, 72, 77, 79, 89, 104, 109, 112, 113, 114, 116, 119, 120, 122, 137, 140, 143, 147, 160, 161, 162, 163, 168, 171, 176, 182, 184, 191, 194, 195, 198, 203, 204, 207, 209, 211, 214, 220, 221, 222, 231, 235, 236,
C.I. Reactive Green 8, 12, 15, 19, 21,
C.I. Reactive Brown 2, 7, 9, 10, 11, 17, 18, 19, 21, 23, 31, 37, 43, 46, and
C.I. Reactive Black 5, 8, 13, 14, 31, 34, 39.

Examples of the acidic dyes include monoazo dyes (such as pyrazolone azo, and benzeneazo), anthraquinone dyes (such as quinizarin, and bromamine acid), polyazo dyes, triallylmethane dyes, xanthene dyes, nitro dyes, and metal complex salt dyes.

More specific examples include:
C.I. Acid Yellow 1, 3, 11, 17, 18, 19, 23, 25, 36, 38, 40, 40:1, 42, 44, 49, 59, 59:1, 61, 65, 67, 72, 73, 79, 99, 104, 159, 169, 176, 184, 193, 200, 204, 207, 215, 219 219:1, 220, 230, 232, 235, 241, 242, 246,
C.I. Acid Orange 3, 7, 8, 10, 19, 24, 51, 51S, 56, 67, 74, 80, 86, 87, 88, 89, 94, 95, 107, 108, 116, 122, 127, 140, 142, 144, 149, 152, 156, 162, 166, 168,
C.I. Acid Red 1, 6, 8, 9, 13, 18, 27, 35, 37, 52, 54, 57, 73, 82, 88, 97, 97:1, 106, 111, 114, 118, 119, 127, 131, 138, 143, 145, 151, 183, 195, 198, 211, 215, 217, 225, 226, 249, 251, 254, 256, 257, 260, 261, 265, 266, 274, 276, 277, 289, 296, 299, 315, 318, 336, 337, 357, 359, 361, 362, 364, 366, 399, 407, 415,
C.I. Acid Violet 17, 19, 21, 42, 43, 47, 48, 49, 54, 66, 78, 90, 97, 102, 109, 126,
C.I. Acid Blue 1, 7, 9, 15, 23, 25, 40, 61:1, 62, 72, 74, 80, 83, 90, 92, 103, 104, 112, 113, 114, 120, 127, 127:1, 128, 129, 138, 140, 142, 156, 158, 171, 182, 185, 193, 199, 201, 203, 204, 205, 207, 209, 220, 221, 224, 225, 229, 230, 239, 258, 260, 264, 277:1, 278, 279, 280, 284, 290, 296, 298, 300, 317, 324, 333, 335, 338, 342, 350,
C.I. Acid Green 9, 12, 16, 19, 20, 25, 27, 28, 40, 43, 56, 73, 81, 84, 104, 108, 109,
C.I. Acid Brown 2, 4, 13, 14, 19, 28, 44, 123, 224, 226, 227, 248, 282, 283, 289, 294, 297, 298, 301, 355, 357, 413, and
C.I. Acid Black 1, 2, 3, 24, 24:1, 26, 31, 50, 52, 52:1, 58, 60, 63, 63S, 107, 109, 112, 119, 132, 140, 155, 172, 187, 188, 194, 207, 222.

For example, the dispersive dyes are preferably a water dispersion of poorly water soluble dyes that are typically used for dyeing of hydrophobic fibers. Examples include dyes used for dyeing of fibers such as polyester fibers and acetate fibers, including, for example, benzeneazo (for example, monoazo, disazo), heterocyclic ring azo (for example, thiazoleazo, benzothiazoleazo, quinolineazo, pyridineazo, imidazoleazo, thiophenoneazo), anthraquinone, and condensation (quinophthalone, styryl, coumalin) dyes.

More specific examples include:
C.I. Disperse Yellow 3, 4, 5, 7, 9, 13, 23, 24, 30, 33, 34, 42, 44, 49, 50, 51, 54, 56, 58, 60, 63, 64, 66, 68, 71, 74, 76, 79, 82, 83, 85, 86, 88, 90, 91, 93, 98, 99, 100, 104, 108, 114, 116, 118, 119, 122, 124, 126, 135, 140, 141, 149, 160, 162, 163, 164, 165, 179, 180, 182, 183, 184, 186, 192, 198, 199, 202, 204, 210, 211, 215, 216, 218, 224, 227, 231, 232,
C.I. Disperse Orange 1, 3, 5, 7, 11, 13, 17, 20, 21, 25, 29, 30, 31, 32, 33, 37, 38, 42, 43, 44, 45, 47, 48, 49, 50, 53, 54, 55, 56, 57, 58, 59, 61, 66, 71, 73, 76, 78, 80, 89, 90, 91, 93, 96, 97, 119, 127, 130, 139, 142,
C.I. Disperse Red 1, 4, 5, 7, 11, 12, 13, 15, 17, 27, 43, 44, 50, 52, 53, 54, 55, 56, 58, 59, 60, 65, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 298, 302, 303, 310, 311, 312, 320, 324, 328,
C.I. Disperse Violet 1, 4, 8, 23, 26, 27, 28, 31, 33, 35, 36, 38, 40, 43, 46, 48, 50, 51, 52, 56, 57, 59, 61, 63, 69, 77,
C.I. Disperse Green 9,
C.I. Disperse Brown 1, 2, 4, 9, 13, 19,
C.I. Disperse Blue 3, 7, 9, 14, 16, 19, 20, 26, 27, 35, 43, 44, 54, 55, 56, 58, 60, 62, 64, 71, 72, 73, 75, 79, 81, 82, 83, 87, 91, 93, 94, 95, 96, 102, 106, 108, 112, 113, 115, 118, 120, 122, 125, 128, 130, 139, 141, 142, 143, 146, 148, 149, 153, 154, 158, 165, 167, 171, 173, 174, 176, 181, 183, 185, 186, 187, 189, 197, 198, 200, 201, 205, 207, 211, 214, 224, 225, 257, 259, 267, 268, 270, 284, 285, 287, 288, 291, 293, 295, 297, 301, 315, 330, 333, and
C.I. Disperse Black 1, 3, 10, 24.

Examples of the direct dyes include polyazo, tolidine, dianisidineazo, and stilbeneazo dyes.

Specific preferable examples of direct dyes that may be contained in the textile printing ink according to the present invention are as follows. The invention, however, is not limited to these exemplary compounds.

C.I. Direct Yellow 8, 9, 10, 11, 12, 22, 27, 28, 39, 44, 50, 58, 86, 87, 98, 105, 106, 130, 137, 142, 147, 153,
C.I. Direct Orange 6, 26, 27, 34, 39, 40, 46, 102, 105, 107, 118,
C.I. Direct Red 2, 4, 9, 23, 24, 31, 54, 62, 69, 79, 80, 81, 83, 84, 89, 95, 212, 224, 225, 226, 227, 239, 242, 243, 254,
C.I. Direct Violet 9, 35, 51, 66, 94, 95,
C.I. Direct Blue 1, 15, 71, 76, 77, 78, 80, 86, 87, 90, 98, 106, 108, 160, 168, 189, 192, 193, 199, 200, 201, 202, 203, 218, 225, 229, 237, 244, 248, 251, 270, 273, 274, 290, 291,
C.I. Direct Green 26, 28, 59, 80, 85,
C.I. Direct Brown 44, 44:1, 106, 115, 195, 209, 210, 212:1, 222, 223, and
C.I. Direct Black 17, 19, 22, 32, 51, 62, 108, 112, 113, 117, 118, 132, 146, 154, 159, 169.

The dyes may directly be used in the form of commercially available products. It is, however, preferable to use the dyes after purification. The dyes may be purified by using known methods, for example, such as recrystallization, and washing. Preferably, the purification method, and the organic solvent used for purification are appropriately selected according to the type of the dye used. The content of the dispersive dye in the ink is preferably 0.1 to 20 mass%.

### (Dyeing Auxiliary Agent)

Dyeing auxiliary agent refers to auxiliary agents used for dyeing, and may be appropriately selected from materials, for example, such as leveling auxiliary agents, retarding auxiliary agents, dyeing promoting agents, mordants, fixing agents, reducing agents, and moisturizers, according to the colorant.

The leveling auxiliary agents or retarding auxiliary agents, or leveling agents or retarding agents as they are also called, are chemicals that slow the dye rate to achieve uniform dyeing. For example, these are surfactants, and are available as fiber compatible leveling agents and dye compatible leveling agents. Examples of leveling agents and retarding agents include Amirazine L-33 by Daiichi Kogyo Seiyaku K.K., Noigen SS by Daiichi Kogyo Seiyaku K.K., Rheopol by Kao Corporation, and Peretex P·W·S by Miyoshi Oil & Fat Co., Ltd..

The dyeing promoting agents are chemicals that promote dyeing for combinations of colorants and fibers that cannot be easily dyed. Examples include sodium chloride (common salt) and sodium nitrate (salt cake) used with a direct dye to dye cellulose, and acids (hydrochloric acid, sulfuric acid, acetic acid, formic acid) used with an acidic dye to dye protein fibers.

The fixing agents are chemicals that mediate a fiber and a colorant to fix a dye in the fiber. Non-limiting examples include Katanol OH, tartar emetic, Fix Salt by Fuji Chemical Industry Co., Ltd., Fix MC by Matsui Chemical Co., Ltd., Nylox 1200·700·800, Silk Fix 3A by Senka Co., Ltd., Amigen by Daiichi Kogyo Seiyaku K. K., Chromosol SS by Senka Co., Ltd., Han Nord Fix, Soritoru N, and TKS by Tokai Oil Industry Co., Ltd..

Examples of the moisturizers include urea.

### (Water-Soluble Solvent)

The water-soluble solvent is a non-curable water-soluble compound with no curable functional groups such as a vinyl group, and a (meth)acryloyl group. Examples include polyalcohols, amines, monohydric alcohols, polyalcohol alkyl ethers, amides, heterocyclic rings, acetonitrile, and 2,2'-thiodiethanol.

Examples of the polyalcohols include ethylene glycol, glycerine, 2-ethyl-2-(hydroxymethyl)-1,3-propanediol, tetraethylene glycol, triethylene glycol, tripropylene glycol, 1,2,4-butanetriol, diethylene glycol, propylene glycol, dipropylene glycol, butyleneglycol, 1,6-hexanediol, 1,2-hexanediol, 1,5-pentanediol, 1,2-pentanediol, 2,2-dimethyl-1,3-propanediol, 2-methyl-2,4-pentanediol, 3-methyl-1,5-pentanediol, 3-methyl-1,3-butanediol, and 2-methyl-1,3-propanediol.

Examples of the amines include ethanolamine, and 2-(dimethylamino)ethanol.

Examples of the monohydric alcohols include methanol, ethanol, and butanol.

Examples of the polyalcohol alkyl ethers include diethylene glycol monomethyl ether, diethylene glycol monobutyl ether, triethylene glycol monomethyl ether, triethylene glycol monobutyl ether, ethylene glycol monomethyl ether, ethylene glycol monobutyl ether, propylene glycol monomethyl ether, propylene glycol monobutyl ether, and dipropylene glycol monomethyl ether.

Examples of the amides include N,N-dimethylformamide.

Examples of the heterocyclic rings include 2-pyrrolidone.

### (Printing Media)

The printing media are not limited to fabric, and the invention is also applicable to various other media, including, for example, yarns, nonwoven fabrics, and resin films and boards, provided that the materials can be dyed with dyes.

### <Printing Method>

The printing method using the textile printing ink according to the present invention has only to be a method that prints with the textile printing ink according to the present invention. Non-light-curable textile printing inks require pretreating the media to prevent bleeding. However, with the textile printing ink according to the present invention, the curing of the ink applied to the media can eliminate the need for fabric pretreatment, and reduce the number of printing steps.

A printing process according to an embodiment of the present invention is described below with reference to Figs. 1a to 1d. As shown in Fig. 1a, a printing medium 10 is printed by moving an IJ head 1 in the direction of arrow X (sub scan direction), using a UV curable textile printing ink representing an embodiment of the textile printing ink according to the present invention. A UV-LED lamp 2 is provided adjacent to the IJ head 1 along the sub scan direction. The IJ head 1 ejects the UV curable textile printing ink, and the UV-LED lamp 2 performs irradiation of UV light as the IJ head 1 and the UV-LED lamp 2 move along the direction of arrow X. The textile printing ink is UV cured and fixed immediately after it is printed, and prevents bleeding. This forms a UV textile printing ink layer L1.

Thereafter, as shown in Fig. 1b, the UV textile printing ink layer L1 is fixed by being irradiated with a UV lamp 3 (secondary fixing). The secondary fixing may be omitted when the primary fixing alone is sufficient to fix the ink.

This is followed by a chromogenic process that causes the dye to diffuse and develop a color in the medium 10, and form a dye layer L2, as shown in Fig. 1c. The chromogenic process may be performed, for example, by applying heat or heated steam.

Finally, as shown in Fig. 1d, a water washing process is performed to remove residues such as residual water-soluble curable resin, leaving the dye layer L2 diffusing and developing a color in the medium.

The light used to cure the light-curable compound contained in the textile printing ink according to the present invention may be appropriately selected according to the type of the light-curable compound. For example, the light may be an electron beam (EB), ultraviolet light, or infrared rays (IR) . The light source is preferably one that generates UV light or visible light of 180 to 500 nm wavelengths, more preferably a UV-LED to prevent the fabric from being overheated and burnt.

Preferably, the printing is followed by washing, as in the example represented by the figures. For example, it is preferable to water wash the fabric to remove the unnecessary unreacted water-soluble polymerizable compounds or polymerized compounds. Water washing can remove the monomer and the cured resin, and eliminate stiffening of the printed fabric.

Specific examples of the printing method using the textile printing ink according to the present invention are described below. The invention, however, is not limited to the following.

### [Printing Method 1]

One form of the printing method according to the present invention is a method that includes: preparing (i) an ink containing a light-curable compound, a chain transfer agent, a photopolymerization initiator, and a dye, the light-curable compound being at least one acrylamide compound having one vinyl group and selected from (meth)acrylamide compounds and N-substitution products thereof, and (ii) an ink containing a dyeing auxiliary agent added to a light-curable compound, a chain transfer agent, and a photopolymerization initiator; and printing with the dyeing auxiliary agent and the dye using different nozzles.

In this way, an offset becomes stable regardless of the color and the color density of the image. Specifically, when the ink containing the dye, the dyeing auxiliary agent, the light-curable compound, the chain transfer agent, and the photopolymerization initiator is ejected through the same nozzle, the ejected amount of ink varies with the color and the color density developed by the dye. In other words, the ejected amount of ink, and thus the extent of offset become different in different parts of the printed medium. On the other hand, with the form of the printing method above, the ink can be ejected in constant amounts according to the developed color and the color density of the ink containing the dye. The extent of offset can thus be uniformly controlled, regardless of the intended color and color density. Further, the printing method whereby the dye and the dyeing auxiliary agent are ejected from different nozzles is adaptable to combinations of materials that destabilize the ink upon mixing the dye and the dyeing auxiliary agent.

### [Printing Method 2]

Another form of the printing method according to the present invention is a method that includes printing a fabric with an ink that contains a light-curable compound, a chain transfer agent, a photopolymerization initiator, a dyeing auxiliary agent, and a dye, the light-curable compound being at least one acrylamide compound having one vinyl group and selected from the group consisting of (meth)acrylamide compounds and N-substitution products thereof. With this form of the printing method, a print can be made at once with a single row of nozzles, and the print time can be reduced.

The present invention is not limited to fabric, and is also applicable to dye various other materials, including, for example, yarns, nonwoven fabrics, and resin films and boards, provided that the materials can be dyed with dyes.

## Claims

1. A printing method comprising:
providing a fabric as a printing media which is not pretreated to prevent bleeding;
preparing (i) a first ink containing a light-curable compound, a chain transfer agent for adjusting the molecular weight of a polymer, a photopolymerization initiator, a dye wherein the light-curable compound is at least one acrylamide compound having one vinyl group and selected from (meth)acrylamide compounds and N-substitution products thereof;
printing the fabric with the first ink;
fixing the first ink by irradiating UV light and curing the first ink;
performing a chromogenic process to cause the dye to diffuse and develop a color in the fabric; and
performing a water washing process to remove residues.

2. The printing method according to claim 1, further comprising:
preparing (ii) a second ink containing a light-curable compound at least one acrylamide compound having one vinyl group and
selected from (meth)acrylamide compounds and N-substitution products thereof, a chain transfer agent, a photopolymerization initiator, and a dyeing auxiliary agent;
and
printing with the first ink and the second ink using different nozzles.

3. The printing method according to claim 1 or 2, the first ink further comprising
a dyeing auxiliary agent, wherein the method further comprises: printing a fabric with the first ink, wherein the dyeing auxiliary agent is selected from leveling auxiliary agents, retarding auxiliary agents, dyeing promoting agents, mordants, fixing agents, reducing agents, and moisturizers.

4. The printing method according to claim 2 or 3, further comprising:
performing irradiation of light for curing and fixing the first ink and the second ink.

5. The printing method according to any one of claims 1 to 4, wherein the light-curable compound is at least one selected from the group consisting of N-alkyl(meth)acrylamides having an alkyl group of 1 to 4 carbon atoms, and N-hydroxyalkyl (meth) acrylamides having an alkyl group of 2 to 4 carbon atoms.

6. The printing method according to claim 5, wherein the N-alkyl (meth) acrylamides having an alkyl group of 1 to 4 carbon atoms are at least one selected from the group consisting of N-methyl(meth)acrylamide, N-ethyl(meth)acrylamide, N-propyl(meth)acrylamide, N-butyl(meth)acrylamide, N,N'-dimethyl(meth)acrylamide (DMAA), and N,N'-diethyl(meth)acrylamide.

7. The printing method according to claim 5 or 6, wherein the N-hydroxyalkyl(meth)acrylamides having an alkyl group of 2 to 4 carbon atoms are at least one selected from the group consisting of N-hydroxyethyl(meth)acrylamide (HEAA), N-hydroxypropyl(meth)acrylamide, and N-hydroxybutyl (meth)acrylamide.

8. The printing method according to any one of claims 1 to 7, wherein the light-curable compound is N-hydroxyethyl(meth)acrylamide.

9. Use of an inkjet printing ink comprising a textile printing ink comprising a light-curable compound, a chain transfer agent adjusting the molecular weight of a polymer, a photopolymerization initiator and a dye for textile printing, wherein the light-curable compound is at least one acrylamide compound having one vinyl group and selected from the group consisting of (meth)acrylamide compounds and N-substitution products thereof.

10. The use according to claim 9, wherein the light-curable compound is at least one selected from the group consisting of N-alkyl(meth)acrylamides having an alkyl group of 1 to 4 carbon atoms, and N-hydroxyalkyl(meth)acrylamides having an alkyl group of 2 to 4 carbon atoms.

11. The use according to claim 10, wherein the N-alkyl (meth) acrylamides having an alkyl group of 1 to 4 carbon atoms are at least one selected from the group consisting of N-methyl(meth)acrylamide, N-ethyl(meth)acrylamide, N-propyl(meth)acrylamide, N-butyl(meth)acrylamide, N,N'-dimethyl(meth)acrylamide (DMAA), and N,N'-diethyl(meth)acrylamide.

12. The use according to claim 10 or 11, wherein the N-hydroxyalkyl (meth) acrylamides having an alkyl group of 2 to 4 carbon atoms are at least one selected from the group consisting of N-hydroxyethyl(meth)acrylamide (HEAA), N-hydroxypropyl(meth)acrylamide, and N-hydroxybutyl(meth)acrylamide.

13. The use according to any one of claims 9 to 12, wherein the light-curable compound is N-hydroxyethyl(meth)acrylamide.

14. The use according to any one of claims 9 to 13, the first ink further comprising a dyeing auxiliary agent wherein the dyeing auxiliary agent is selected from leveling auxiliary agents, retarding auxiliary agents, dyeing promoting agents, mordants, fixing agents, reducing agents, and moisturizers.

## Patentansprüche

1. Druckverfahren, umfassend:
Bereitstellen eines Stoffes als ein Druckmedium, der nicht vorbehandelt ist, um Bluten zu vermeiden;
Herstellen bzw. Vorbereiten (i) einer ersten Tinte, die eine lichthärtbare Verbindung, ein Kettenübertragungsmittel zum Einstellen des Molekulargewichts eines Polymers, einen Photopolymerisationsinitiator, einen Farbstoff enthält, wobei die lichthärtbare Verbindung mindestens eine Acrylamidverbindung mit einer Vinylgruppe ist und ausgewählt ist aus (Meth)acrylamidverbindungen und N- Substitutionsprodukten davon;
Bedrucken des Stoffes mit der ersten Tinte;
Fixieren der ersten Tinte durch Bestrahlung mit UV-Licht und Härten der ersten Tinte;
Durchführen eines chromogenen Prozesses, um den Farbstoff zu veranlassen, sich zu verbreiten und eine Farbe in dem Stoff zu entwickeln; und
Durchführen eines Wasserwaschprozesses, um Reste zu entfernen.

2. Druckverfahren nach Anspruch 1, ferner umfassend:
Herstellen bzw. Vorbereiten (ii) einer zweiten Tinte, die eine lichthärtbare Verbindung, mindestens eine Acrylamidverbindung mit einer Vinylgruppe und ausgewählt aus (Meth)acrylamidverbindungen und N-Substitutionsprodukten davon, ein Kettenübertragungsmittel, einen Photopolymerisationsinitiator und ein Färbehilfsmittel enthält; und
Drucken mit der ersten Tinte und der zweiten Tinte unter Verwendung verschiedener Düsen.

3. Druckverfahren nach Anspruch 1 oder 2, wobei die erste Tinte ferner ein Färbehilfsmittel umfasst, wobei das Verfahren ferner umfasst: Bedrucken eines Stoffes mit der ersten Tinte, wobei das Färbehilfsmittel ausgewählt ist aus Ausgleichshilfsmitteln, Verzögerungshilfsmitteln, Färbefördermitteln, Beizmitteln, Fixiermitteln, Reduktionsmitteln und Feuchtigkeitsspendern.

4. Druckverfahren nach Anspruch 2 oder 3, ferner umfassend:
Durchführen einer Bestrahlung mit Licht zum Härten und Fixieren der ersten Tinte und der zweiten Tinte.

5. Druckverfahren nach einem der Ansprüche 1 bis 4, wobei die lichthärtbare Verbindung mindestens eines, ausgewählt aus der Gruppe, bestehend aus N-Alkyl(meth)acrylamiden mit einer Alkylgruppe mit 1 bis 4 Kohlenstoffatomen und N-Hydroxyalkyl(meth)acrylamiden mit einer Alkylgruppe mit 2 bis 4 Kohlenstoffatomen, ist.

6. Druckverfahren nach Anspruch 5, wobei die N-Alkyl(meth)acrylamide, die eine Alkylgruppe mit 1 bis 4 Kohlenstoffatomen aufweisen, mindestens eines, ausgewählt aus der Gruppe, bestehend aus N-Methyl(meth)acrylamid, N-Ethyl(meth)acrylamid, N-Propyl(meth)acrylamid, N-Butyl(meth)acrylamid, N,N'-Dimethyl(meth)acrylamid (DMAA) und N,N'-Diethyl(meth)acrylamid, sind.

7. Druckverfahren nach Anspruch 5 oder 6, wobei die N-Hydroxyalkyl(meth)acrylamide, die eine Alkylgruppe mit 2 bis 4 Kohlenstoffatomen aufweisen, mindestens eines, ausgewählt aus der Gruppe, bestehend aus N-Hydroxyethyl(meth)acrylamid (HEAA), N-Hydroxypropyl(meth)acrylamid und N-Hydroxybutyl(meth)acrylamid, sind.

8. Druckverfahren nach einem der Ansprüche 1 bis 7, wobei die lichthärtbare Verbindung N-Hydroxyethyl(meth)acrylamid ist.

9. Verwendung einer Tintenstrahldrucktinte, umfassend eine Textildrucktinte, umfassend eine lichthärtbare Verbindung, ein Kettenübertragungsmittel zum Einstellen des Molekulargewichts eines Polymers, einen Photopolymerisationsinitiator und einen Farbstoff zum Textildrucken, wobei die lichthärtbare Verbindung mindestens eine Acrylamidverbindung mit einer Vinylgruppe ist und ausgewählt ist aus der Gruppe, bestehend aus (Meth)acrylamidverbindungen und N- Substitutionsprodukten davon.

10. Verwendung nach Anspruch 9, wobei die lichthärtbare Verbindung mindestens eines, ausgewählt aus der Gruppe, bestehend aus N-Alkyl(meth)acrylamiden mit einer Alkylgruppe mit 1 bis 4 Kohlenstoffatomen und N-Hydroxyalkyl(meth)acrylamiden mit einer Alkylgruppe mit 2 bis 4 Kohlenstoffatomen, ist.

11. Verwendung nach Anspruch 10, wobei die N-Alkyl(meth)acrylamide, die eine Alkylgruppe mit 1 bis 4 Kohlenstoffatomen aufweisen, mindestens eines, ausgewählt aus der Gruppe, bestehend aus N-Methyl(meth)acrylamid, N-Ethyl(meth)acrylamid, N-Propyl(meth)acrylamid, N-Butyl(meth)acrylamid, N,N'-Dimethyl(meth)acrylamid (DMAA) und N,N'-Diethyl(meth)acrylamid, sind.

12. Verwendung nach Anspruch 10 oder 11, wobei die N-Hydroxyalkyl(meth)acrylamide, die eine Alkylgruppe mit 2 bis 4 Kohlenstoffatomen aufweisen, mindestens eines, ausgewählt aus der Gruppe, bestehend aus N-Hydroxyethyl(meth)acrylamid (HEAA), N-Hydroxypropyl(meth)acrylamid und N-Hydroxybutyl(meth)acrylamid, sind.

13. Verwendung nach einem der Ansprüche 9 bis 12, wobei die lichthärtbare Verbindung N-Hydroxyethyl(meth)acrylamid ist.

14. Verwendung nach einem der Ansprüche 9 bis 13, wobei die erste Tinte ferner ein Färbehilfsmittel umfasst, wobei das Färbehilfsmittel ausgewählt ist aus Ausgleichshilfsmitteln, Verzögerungshilfsmitteln, Färbefördermitteln, Beizmitteln, Fixiermitteln, Reduktionsmitteln und Feuchtigkeitsspendern.

## Revendications

1. Procédé d'impression comprenant :
la fourniture d'un tissu en tant que support d'impression qui n'est pas prétraité pour éviter le dégorgement ;
la préparation (i) d'une première encre contenant un composé photodurcissable, un agent de transfert de chaîne pour ajuster le poids moléculaire d'un polymère, un initiateur de photopolymérisation, un colorant dans lequel le composé photodurcissable est au moins un composé acrylamide ayant un groupe vinyle et sélectionné parmi les composés (méth)acrylamide et les produits à N-substitution de ceux-ci ;
l'impression de la première encre sur le tissu ;
la fixation de la première encre par exposition à une lumière UV et durcissement de la première encre ;
la réalisation d'un procédé chromogène pour entraîner la diffusion du colorant et le développement d'une couleur dans le tissu ; et
la réalisation d'un procédé de lavage à l'eau pour éliminer les résidus.

2. Procédé d'impression selon la revendication 1, comprenant en outre :
la préparation (ii) d'une seconde encre contenant un composé photodurcissable, au moins un composé acrylamide ayant un groupe vinyle et sélectionné parmi les composés (méth)acrylamide et les produits à N-substitution de ceux-ci, un agent de transfert de chaîne, un initiateur de photopolymérisation, et un agent auxiliaire de coloration ; et
l'impression avec la première encre et la seconde encre à l'aide de différentes buses.

3. Procédé d'impression selon la revendication 1 ou 2, la première encre comprenant en outre :
un agent auxiliaire de coloration, dans lequel le procédé comprend en outre : l'impression sur un tissu avec la première encre, dans lequel l'agent auxiliaire de coloration est sélectionné parmi des agents auxiliaires égalisants, des agents auxiliaires retardateurs, des agents de promotion de coloration, des mordants, des agents de fixation, des agents réducteurs, et des agents mouillants.

4. Procédé d'impression selon la revendication 2 ou 3, comprenant en outre :
l'exposition à une lumière pour durcir et fixer la première encre et la seconde encre.

5. Procédé d'impression selon l'une quelconque des revendications 1 à 4, dans lequel le composé photodurcissable est au moins un sélectionné dans le groupe constitué par des N-alkyl (méth)acrylamides ayant un groupe alkyle de 1 à 4 atomes de carbone, et des N-hydroxyalkyl (méth)acrylamides ayant un groupe alkyle de 2 à 4 atomes de carbone.

6. Procédé d'impression selon la revendication 5, dans lequel les N-alkyl (méth)acrylamides ayant un groupe alkyle de 1 à 4 atomes de carbone sont au moins un sélectionné dans le groupe constitué par les N-méthyl (méth)acrylamide, N-éthyl (méth)acrylamide, N-propyl (méth)acrylamide, N-butyl (méth)acrylamide, N,N'-diméthyl (méth)acrylamide (DMAA), et N,N'-diéthyl (méth)acrylamide.

7. Procédé d'impression selon la revendication 5 ou 6, dans lequel les N-hydroxyalkyl (méth)acrylamides ayant un groupe alkyle de 2 à 4 atomes de carbone sont au moins un sélectionné dans le groupe constitué par les N-hydroxyéthyl (méth)acrylamide (HEAA), N-hydroxypropyl (méth)acrylamide, et N-hydroxybutyl (méth)acrylamide.

8. Procédé d'impression selon l'une quelconque des revendications 1 à 7, dans lequel le composé photodurcissable est le N-hydroxyéthyl (méth)acrylamide.

9. Utilisation d'une encre pour impression à jet d'encre comprenant une encre d'impression textile comprenant un composé photodurcissable, un agent de transfert de chaîne ajustant le poids moléculaire d'un polymère, un initiateur de polymérisation et un colorant pour impression textile, dans lequel le composé photodurcissable est au moins un composé acrylamide ayant un groupe vinyle et sélectionné dans le groupe constitué par des composés (méth)acrylamide et des produits à N-substitution de ceux-ci.

10. Utilisation selon la revendication 9, dans laquelle le composé photodurcissable est au moins un sélectionné dans le groupe constitué par des N-alkyl (méth)acrylamides ayant un groupe alkyle de 1 à 4 atomes de carbone, et des N-hydroxyalkyl (méth)acrylamides ayant un groupe alkyle de 2 à 4 atomes de carbone.

11. Utilisation selon la revendication 10, dans laquelle les N-alkyl (méth)acrylamides ayant un groupe alkyle de 1 à 4 atomes de carbone sont au moins un sélectionné dans le groupe constitué par les N-méthyl (méth)acrylamide, N-éthyl (méth)acrylamide, N-propyl (méth)acrylamide, N-butyl (méth)acrylamide, N,N'-diméthyl (méth)acrylamide (DMAA), et N,N'-diéthyl (méth)acrylamide.

12. Utilisation selon la revendication 10 ou 11, dans laquelle les N-hydroxyalkyl (méth)acrylamides ayant un groupe alkyle de 2 à 4 atomes de carbone sont au moins un sélectionné dans le groupe constitué par les N-hydroxyéthyl (méth)acrylamide (HEAA), N-hydroxypropyl (méth)acrylamide, et N-hydroxybutyl (méth)acrylamide.

13. Utilisation selon l'une quelconque des revendications 9 à 12, dans laquelle le composé photodurcissable est le N-hydroxyéthyl (méth)acrylamide.

14. Utilisation selon l'une quelconque des revendications 9 à 13, la première encre comprenant en outre un agent auxiliaire de coloration dans laquelle l'agent auxiliaire de coloration est sélectionné parmi des agents auxiliaires égalisants, des agents auxiliaires retardateurs, des agents de promotion de coloration, des mordants, des agents de fixation, des agents réducteurs, et des agents mouillants.
